# EUROPÄISCHE PATENTSCHRIFT

(11) **EP 3 214 511 B1**
(45) Veröffentlichungstag und Bekanntmachung des Hinweises auf die Patenterteilung: **09.05.2018**
(21) Anmeldenummer: 16158708.4
(22) Anmeldetag: 04.03.2016
(51) Int. Cl.: G05B 19/042

(54) **KONTROLLIERTE BEREITSTELLUNG VON STEUERUNGSDATEN**
CONTROLLED PROVISION OF CONTROL DATA
MISE À DISPOSITION CONTROLÉE DE DONNÉES DE CONTRÔLE

(43) Veröffentlichungstag der Anmeldung: 06.09.2017
(73) Patentinhaber: Siemens Aktiengesellschaft, 80333 München (DE)
(72) Erfinder: Bretschneider, Jochen, Dr., 73732 Esslingen (DE)

(56) Entgegenhaltungen:
- DE-A1- 19 753 517
- DE-A1-102011 001 524
- DE-A1-102011 053 319
- DE-A1-102014 102 844

## Beschreibung

Die vorliegende Erfindung geht aus von einem Betriebsverfahren für einen Rechnerverbund,
- wobei der Rechnerverbund eine Steuereinrichtung zum Steuern eines industriellen technischen Prozesses, eine Logikeinheit und eine Speichereinrichtung umfasst,
- wobei die Steuereinrichtung den industriellen technischen Prozess in einem Arbeitstakt steuert,
- wobei die Steuereinrichtung Prozessdaten, die im Rahmen der Steuerung des industriellen technischen Prozesses innerhalb der Steuereinrichtung mit dem Arbeitstakt anfallen, zumindest temporär in der Speichereinrichtung hinterlegt,
- wobei die Logikeinheit über eine Schnittstelle zu einem Rechnernetz von einem externen Rechner außerhalb des Rechnerverbunds eine Anforderung für die Prozessdaten entgegennimmt;
- wobei die Logikeinheit in dem Fall, dass die Anforderung eine Zugriffsbedingung erfüllt, die in der Speichereinrichtung hinterlegten Prozessdaten entsprechend der Anforderung an den externen Rechner übermittelt.

Solch ein Verfahren wird in DE 10 2011 053319 A1 offenbart.

Die vorliegende Erfindung geht weiterhin aus von einem Computerprogramm, das Maschinencode umfasst, der von einer Logikeinheit eines Rechnerverbundes abarbeitbar ist, wobei die Abarbeitung des Maschinencodes durch die Logikeinheit bewirkt, dass die Logikeinheit die auf die Logikeinheit bezogenen Schritte eines derartigen Betriebsverfahrens ausführt.

Die vorliegende Erfindung geht weiterhin aus von einer Logikeinheit eines Rechnerverbundes, wobei die Logikeinheit mit einem derartigen Computerprogramm programmiert ist, so dass die Logikeinheit die auf die Logikeinheit bezogenen Schritte eines derartigen Betriebsverfahrens ausführt.

Die vorliegende Erfindung geht weiterhin aus von einem Rechnerverbund,
- wobei der Rechnerverbund eine Steuereinrichtung zum Steuern eines industriellen technischen Prozesses, eine Logikeinheit und eine Speichereinrichtung umfasst,
- wobei die Logikeinheit so wie obenstehend erläutert ausgebildet ist.

Steuereinrichtungen wie beispielsweise numerische Steuerungen, speicherprogrammierbare Steuerungen oder Industrie-PCs verfügen über Eingabe-/Ausgabeschnittstellen, die von einem Programmierer der Steuereinrichtung programmiert werden können, so dass von außen auf die Daten der jeweiligen Steuereinrichtung zugegriffen werden kann. Beispiele derartiger Schnittstellen sind HMI-OA, OPC-UA, MT Connect, NCK-OA und andere mehr.

Über die Schnittstellen können beispielsweise Statusinformationen, Prozessvariable und andere Größen im Takt der Bereitstellung durch die Steuereinrichtung abgefragt und dann außerhalb der Steuereinrichtung weiter verarbeitet werden. Die weitere Verarbeitung kann insbesondere auf Rechnern erfolgen, die in keinerlei Verbindung mit der Steuereinrichtung stehen.

Die externe Auswertung derartiger Daten ist von erheblichem Interesse. So können beispielsweise anhand derartiger Daten zukünftige Bedürfnisse der Betreiber der zugehörigen industriellen technischen Prozesse ermittelt werden. Auch ist es möglich, Optimierungen des Betriebs des industriellen technischen Prozesses zu ermitteln.

Im Stand der Technik bestehen innerhalb der Steuereinrichtung bzw. innerhalb des Rechnerverbundes, dessen Bestandteil die Steuereinrichtung ist, keinerlei Schranken, die den Zugriff auf die innerhalb der Steuereinrichtung anfallenden Prozessdaten beschränken. Eine bewusste - d.h. durch den Rechnerverbund gesteuerte - Beeinflussung der an den externen Rechner übermittelten Daten erfolgt nicht. Vielmehr werden die Prozessdaten - lediglich beschränkt durch die Bandbreite der Anbindung des externen Rechners an den Rechnerverbund - mit dem Arbeitstakt an den externen Rechner übermittelt.

Die Aufgabe der vorliegenden Erfindung besteht darin, Möglichkeiten zu schaffen, mittels derer sowohl eine Beschränkung des Zugriffs auf die Prozessdaten realisiert werden kann als auch ein unbeschränkter Zugriff auf die Prozessdaten realisiert werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art dadurch ausgestaltet,
- dass die Logikeinheit in dem Fall, dass die Anforderung die Zugriffsbedingung nicht erfüllt, die in der Speichereinrichtung hinterlegten Prozessdaten vorverarbeitet, so dass die vorverarbeiteten Prozessdaten im Vergleich zu den hinterlegten Prozessdaten einen reduzierten Informationsgehalt aufweisen, und nur die vorverarbeiteten Prozessdaten entsprechend der Anforderung an den externen Rechner übermittelt.

Dadurch können zum einen - so wie im Stand der Technik auch - die in der Speichereinrichtung hinterlegten Prozessdaten ohne Vorverarbeitung, das heißt so wie sie sind, an den externen Rechner übermittelt werden. Diese Übermittlung erfolgt jedoch nur, wenn der externe Rechner sich hierfür qualifiziert hat. Anderenfalls werden nur die vorverarbeiteten Prozessdaten, also die Prozessdaten mit dem reduzierten Informationsgehalt, an den externen Rechner übermittelt.

Die Vorverarbeitung kann auf verschiedene Art und Weise ausgestaltet sein.

So ist es beispielsweise möglich, dass die Vorverarbeitung ein Ausfiltern von auf bestimmte Arbeitstakte bezogenen, in der Speichereinrichtung hinterlegten Prozessdaten umfasst. Beispielsweise können durch die Vorverarbeitung die in der Speichereinrichtung hinterlegten Prozessdaten für 4 von jeweils 5 Arbeitstakten oder für 9 von jeweils 10 Arbeitstakten ausgefiltert werden. Auch ist es möglich, beispielsweise nur für kürzere, in sich geschlossene Zeiträume die Prozessdaten zur Verfügung zu stellen und für die verbleibenden Zeiträume die Prozessdaten nicht zur Verfügung zu stellen. Beispielsweise können die Prozessdaten pro Stunde nur für jeweils 5 Minuten oder pro Woche nur für einen Tag zur Verfügung gestellt werden. Insbesondere durch das Zurverfügungstellen für Zeiträume - wobei die Zeiträume sich, je nach Lage des Einzelfalls, vom Sekundenbereich über den Minutenbereich bis darüber hinaus erstrecken können - kann erreicht werden, dass ein Nutzer des externen Rechners besser beurteilen kann, ob die vollständigen Prozessdaten für ihn relevant sind.

Alternativ oder zusätzlich ist es möglich, dass die Vorverarbeitung eine Mittelwertbildung von auf einen Zeitraum von mehreren Arbeitstakten bezogenen, in der Speichereinrichtung hinterlegten Prozessdaten umfasst. Beispielsweise können Lagewerte (Istwerte oder Sollwerte) über jeweils 5 oder 10 Arbeitstakte gemittelt werden. Selbstverständlich sind auch andere Anzahlen von Arbeitstakten möglich.

Alternativ oder zusätzlich ist es möglich, dass die Vorverarbeitung die Ermittlung eines Wertes anhand von mehreren auf einen jeweiligen Arbeitstakt bezogenen, in der Speichereinrichtung hinterlegten Prozessdaten umfasst. Beispielsweise kann für mehrere Antriebe nur die insgesamt von den Antrieben bezogene Leistung - also ohne Aufteilung auf die einzelnen Antriebe - zur Verfügung gestellt werden.

Alternativ oder zusätzlich ist es möglich, dass die Vorverarbeitung eine Rundung von in der Speichereinrichtung hinterlegten Prozessdaten umfasst. Es können also Werte ungenauer gemacht werden. Beispielsweise kann eine erfasste Lage vor der Vorverarbeitung mit einer Genauigkeit von 0,1 mm zur Verfügung stehen, nach der Vorverarbeitung nur noch mit einer Genauigkeit von 1 mm.

Alternativ oder zusätzlich ist es möglich, dass die in der Speichereinrichtung hinterlegten Prozessdaten zusätzlich zu den erfassten Prozessdaten jeweils einen zugeordneten Namen umfassen und dass die Vorverarbeitung eine vollständige oder teilweise Entfernung des Namens umfasst. Die Effizienz dieser Maßnahme kann dadurch noch gesteigert werden, dass die Vorverarbeitung eine dynamische Umsortierung der vorverarbeiteten Prozessdaten gegenüber den in der Speichereinrichtung hinterlegten Prozessdaten umfasst. Beispielsweise kann bei mehreren Antrieben die Reihenfolge vertauscht werden. Durch die Dynamik der Umsortierung kann erreicht werden, dass eine nachträgliche Ermittlung der richtigen Reihenfolge erschwert wird oder unter Umständen sogar unmöglich wird.

Alternativ oder zusätzlich ist es möglich, dass die Vorverarbeitung ein teilweises Ausfiltern von auf einen bestimmten Arbeitstakt bezogenen Prozessdaten umfasst. Beispielsweise ist es möglich, dass bei einer fünfachsigen Werkzeugmaschine nur die Werte für 2 der 5 Achsen zur Verfügung gestellt werden.

Es ist möglich, dass die in der Speichereinrichtung hinterlegten Prozessdaten dort nur temporär gespeichert werden. Vorzugsweise jedoch ist den in der Speichereinrichtung hinterlegten Prozessdaten ein Zeitstempel zugeordnet und werden weiterhin die Prozessdaten in der Speichereinrichtung archiviert. In diesem Fall erfolgt ein Überschreiben entweder nie oder nur auf eine ausdrückliche, dem Rechnerverbund von außen vorgegebene Löschanweisung oder aber nach Ablauf einer hinreichend langen Wartezeit. Die Wartezeit korrespondiert hierbei in der Regel mit einem Zeitraum von mehreren Jahren.

Die Steuereinrichtung kann nach Bedarf ausgebildet sein. Insbesondere ist es möglich, dass die Steuereinrichtung als numerische Steuerung, als speicherprogrammierbare Steuerung oder als Industrie-PC ausgebildet ist.

Es ist möglich, dass die Logikeinheit und die Steuereinrichtung eine Einheit bilden. Alternativ ist es möglich, dass die Logikeinheit eine von der Steuereinrichtung verschiedene Einrichtung ist.

Die Aufgabe wird weiterhin durch ein Computerprogramm mit den Merkmalen des Anspruchs 13 gelöst. Erfindungsgemäß wird ein Computerprogramm der eingangs genannten Art dadurch ausgestaltet, dass die Abarbeitung des Computerprogramms durch die Logikeinheit bewirkt, dass die Logikeinheit die auf die Logikeinheit bezogenen Schritte eines erfindungsgemäßen Betriebsverfahrens ausführt.

Die Aufgabe wird weiterhin durch eine Logikeinheit mit den Merkmalen des Anspruchs 14 gelöst. Erfindungsgemäß ist die Logikeinheit mit einem erfindungsgemäßen Computerprogramm programmiert, so dass die Logikeinheit die auf die Logikeinheit bezogenen Schritte eines erfindungsgemäßen Betriebsverfahrens ausführt.

Die Aufgabe wird weiterhin durch einen Rechnerverbund mit den Merkmalen des Anspruchs 15 gelöst. Erfindungsgemäß ist die Logikeinheit des Rechnerverbundes erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Rechnerverbund,
- FIG 2: ein Ablaufdiagramm,
- FIG 3: eine Datenstruktur,
- FIG 4: ein Ablaufdiagramm,
- FIG 5: vorverarbeitete Prozessdaten,
- FIG 6: vorverarbeitete Prozessdaten,
- FIG 7: vorverarbeitete Prozessdaten,
- FIG 8: Prozessdaten und vorverarbeitete Prozessdaten,
- FIG 9: vorverarbeitete Prozessdaten und
- FIG 10: vorverarbeitete Prozessdaten.

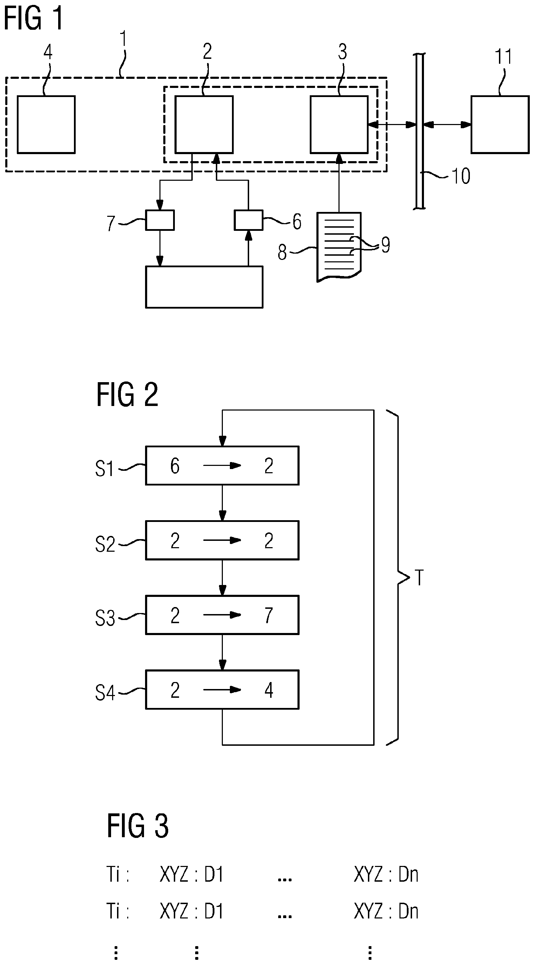

Gemäß FIG 1 umfasst ein Rechnerverbund 1 eine Steuereinrichtung 2, eine Logikeinheit 3 und eine Speichereinrichtung 4. Die Steuereinrichtung 2 dient zum Steuern eines industriellen technischen Prozesses 5, beispielsweise einer Werkzeugmaschine, eines Roboters oder eines Fertigungsprozesses. Dementsprechend kann die Steuereinrichtung 2 beispielsweise als numerische Steuerung, als speicherprogrammierbare Steuerung oder als Industrie-PC ausgebildet sein.

Die Steuereinrichtung 2 steuert den industriellen technischen Prozess 5 dadurch, dass sie entsprechend der Darstellung in FIG 2 mit einem Arbeitstakt T iterativ Schritte S1 bis S4 ausführt. Im Schritt S1 nimmt die Steuereinrichtung 2 über Sensoren 6 Istwerte des industriellen technischen Prozesses 5 entgegen. Im Schritt S2 ermittelt die Steuereinrichtung 2 interne Daten und Sollwerte für den industriellen technischen Prozess 5. Im Schritt S3 steuert die Steuereinrichtung 2 auf den industriellen technischen Prozess 5 wirkende Aktoren 7 entsprechend dem ermittelten Sollwerten an. Im Schritt S4 hinterlegt die Steuereinrichtung 2 in der Speichereinrichtung 4 Prozessdaten D1 bis Dn (siehe FIG 3). Bei den Prozessdaten D1 bis Dn kann es sich um Istwerte oder um Sollwerte des industriellen technischen Prozesses 5 oder um interne Daten der Steuereinrichtung 2 handeln. In vielen Fällen ordnet die Steuereinrichtung 2 den hinterlegten Prozessdaten D1 bis Dn einen Zeitstempel Ti zu. Der jeweilige Zeitstempel Ti ist charakteristisch für den Arbeitstakt T, für den die Prozessdaten D1 bis Dn gültig sind, also - je nachdem, um welche Daten es sich handelt - für den Arbeitstakt T, zu dem die Istwerte erfasst wurden, die internen Daten ermittelt wurden oder die Sollwerte an die Aktoren 7 ausgegeben wurden. Diese Vorgehensweise ist insbesondere dann von Vorteil, wenn die Prozessdaten D1 bis Dn in der Speichereinrichtung 4 archiviert werden.

Es ist entsprechend der Darstellung in FIG 1 möglich, dass die Logikeinheit 3 eine von der Steuereinrichtung 2 verschiedene Einrichtung ist. Alternativ ist es möglich, dass die Logikeinheit 3 und die Steuereinrichtung 2 eine Einheit bilden. Dies ist in FIG 1 durch eine gestrichelte Umrahmung angedeutet.

Die Logikeinheit 3 ist mit einem Computerprogramm 8 programmiert. Das Computerprogramm 8 umfasst Maschinencode 9, der von der Logikeinheit 3 abarbeitbar ist. Die Abarbeitung des Maschinencodes 9 durch die Logikeinheit 3 bewirkt, dass die Logikeinheit 3 so arbeitet, wie diese nachfolgend in Verbindung mit den weiteren FIG näher erläutert wird.

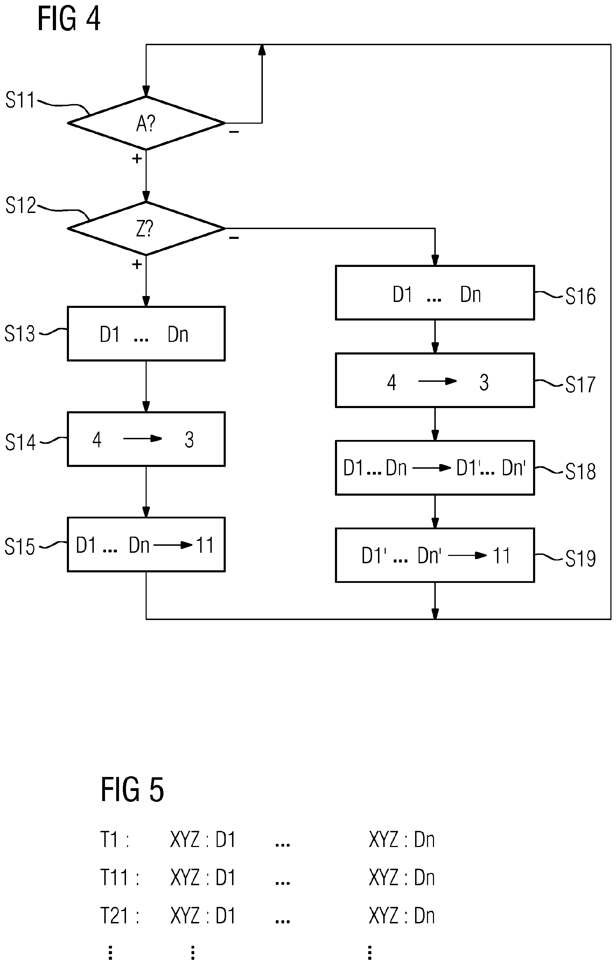

Die Logikeinheit 3 ist entsprechend der Darstellung in FIG 1 über eine Schnittstelle zu einem Rechnernetz 10 (beispielsweise ein LAN oder ein WAN, insbesondere das Internet) zumindest zeitweise mit einem Rechner 11 verbunden. Der Rechner 11 steht außerhalb des Rechnerverbundes 1. Er wird daher nachfolgend als externer Rechner 11 bezeichnet. Die Logikeinheit 3 prüft entsprechend der Darstellung in FIG 4 in einem Schritt S11, ob ihr von dem externen Rechner 11 eine Anforderung A für die Prozessdaten D1 bis Dn übermittelt wurde. Wenn ja, nimmt sie die Daten im Schritt S11 entgegen und geht zum Schritt S12 über. Anderenfalls verharrt die Logikeinheit 3 beim Schritt S11. Im Schritt S12 prüft die Logikeinheit 3, ob die Anforderung A eine Zugriffsbedingung Z erfüllt. Wenn dies der Fall ist, geht die Logikeinheit 3 zu Schritten S13 bis S15 über, anderenfalls zu Schritten S16 bis S19.

Im Schritt S13 ermittelt die Logikeinheit 3 die durch die Anforderung A angeforderten Prozessdaten D1 bis Dn. Im Schritt S14 ruft die Logikeinheit 3 diese Prozessdaten D1 bis Dn aus der Speichereinrichtung 4 ab. Im Schritt S15 übermittelt die Logikeinheit 3 entsprechend der Anforderung A die entsprechenden Prozessdaten D1 bis Dn an den externen Rechner 11.

Im Schritt S16 ermittelt die Logikeinheit 3 - ebenso wie im Schritt S13 die durch die Anforderung A angeforderten Prozessdaten D1 bis Dn. Im Schritt S17 ruft die Logikeinheit 3 diese Prozessdaten D1 bis Dn - ebenso wie im Schritt S14 - aus der Speichereinrichtung 4 ab. Im Schritt S18 nimmt die Logikeinheit 3 eine Vorverarbeitung der aus der Speichereinrichtung 4 abgerufenen Prozessdaten D1 bis Dn vor. Sie ermittelt dadurch vorverarbeitete Prozessdaten D1' bis Dn'. Die Vorverarbeitung ist derart, dass die vorverarbeiteten Prozessdaten D1' bis Dn' im Vergleich zu den hinterlegten Prozessdaten D1 bis Dn einen reduzierten Informationsgehalt aufweisen. Mögliche Vorverarbeitungen werden nachstehend erläutert werden. Im Schritt S19 übermittelt die Logikeinheit 3 entsprechend der Anforderung A die vorverarbeiteten Prozessdaten D1' bis Dn' an den externen Rechner 11.

Die in der Speichereinrichtung 4 hinterlegten Prozessdaten D1 bis Dn sind (auch dann, wenn den Prozessdaten D1 bis Dn nicht der jeweilige Zeitstempel Ti zugeordnet ist) stets auf einen bestimmten Arbeitstakt T bezogen. Die Vorverarbeitung kann beispielsweise darin bestehen, dass die Logikeinheit 3 auf bestimmte Arbeitstakte T bezogene, in der Speichereinrichtung 4 hinterlegte Prozessdaten D1 bis Dn ausfiltert. Rein beispielhaft ist dies in FIG 5 dadurch dargestellt, dass die vorverarbeiteten Prozessdaten D1' bis Dn' nur jeden zehnten Satz von Prozessdaten D1 bis Dn enthalten.

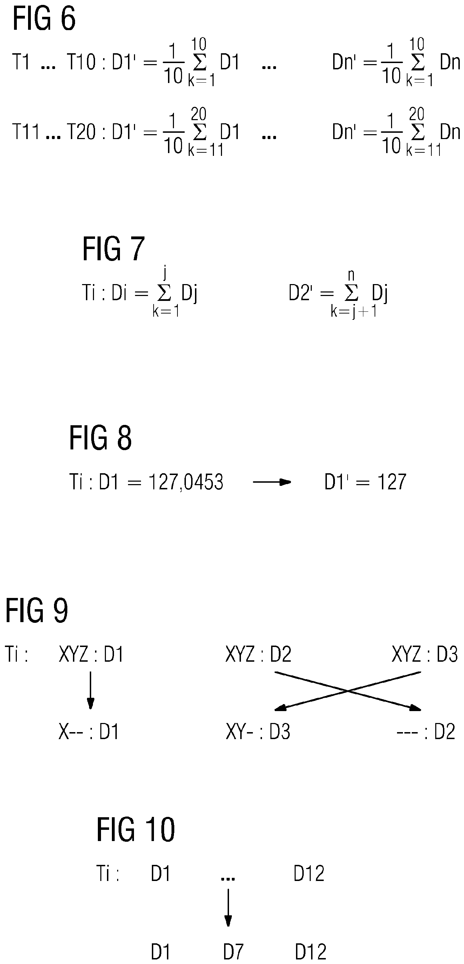

Alternativ oder zusätzlich ist es möglich, dass die Vorverarbeitung entsprechend der Darstellung in FIG 6 darin besteht, dass die Logikeinheit 3 bezüglich der in der Speichereinrichtung 4 hinterlegten Prozessdaten D1 bis Dn über einen Zeitraum von mehreren Arbeitstakten T - rein beispielhaft zehn Arbeitstakte T - eine Mittelwertbildung vornimmt.

Alternativ oder zusätzlich ist es möglich, dass die Vorverarbeitung entsprechend der Darstellung in FIG 7 darin besteht, dass die Logikeinheit 3 für mehrere in der Speichereinrichtung 4 hinterlegte Prozessdaten D1 bis Dn, die jedoch alle auf einen bestimmten Arbeitstakt T bezogen sind, einen Wert ermittelt, beispielsweise die Summe oder den Mittelwert. In diesem Fall wird anstelle der ursprünglichen Prozessdaten D1 bis Dn, die in den ermittelten Wert eingehen, nur der ermittelte Wert an den externen Rechner 11 übermittelt.

Alternativ oder zusätzlich ist es möglich, dass die Vorverarbeitung entsprechend der Darstellung in FIG 8 darin besteht, dass die Logikeinheit 3 eine Rundung von in der Speichereinrichtung 4 hinterlegten Prozessdaten D1 bis Dn vornimmt. In diesem Fall werden anstelle der ursprünglichen Prozessdaten D1 bis Dn nur die gerundeten Werte D1' bis Dn' an den externen Rechner 11 übermittelt.

In vielen Fällen sind umfassen die in der Speichereinrichtung 4 hinterlegten Prozessdaten D1 bis Dn entsprechend der Darstellung in FIG 3 zusätzlich zu den Prozessdaten D1 bis Dn selbst jeweils einen zugeordneten Namen XYZ. In diesem Fall kann die Vorverarbeitung entsprechend der Darstellung in FIG 9 darin bestehen, dass die Logikeinheit 3 den Namen XYZ vollständig oder teilweise entfernt. Zusätzlich kann die Logikeinheit 3 in diesem Fall entsprechend der Darstellung in FIG 9 auch gegenüber den in der Speichereinrichtung 4 hinterlegten Prozessdaten D1 bis Dn eine Umsortierung umfassen. Die vorverarbeiteten Prozessdaten D1' bis Dn' weisen also in diesem Fall nicht dieselbe Reihenfolge auf wie die Prozessdaten D1 bis Dn selbst. Falls die Umsortierung vorgenommen wird, ist sie vorzugsweise dynamisch. Die Umsortierung variiert also von Anforderung A zu Anforderung A und/oder innerhalb einer Anforderung A von auf einen bestimmten Arbeitstakt T bezogenen Prozessdaten D1 bis Dn zu auf einen anderen Arbeitstakt T bezogenen Prozessdaten D1 bis Dn.

Alternativ oder zusätzlich ist es möglich, dass die Vorverarbeitung entsprechend der Darstellung in FIG 10 darin besteht, dass die Logikeinheit 3 nur manche der der Speichereinrichtung 4 hinterlegten Prozessdaten D1 bis Dn als vorverarbeitete Prozessdaten D1' bis Dn' übernimmt. Es erfolgt also ein teilweises Ausfiltern von Prozessdaten D1 bis Dn. Der Unterschied zur Vorgehensweise von FIG 5 besteht darin, dass im Rahmen der Vorgehensweise von FIG 10 das Ausfiltern intern innerhalb auf einen bestimmten Arbeitstakt T bezogener Prozessdaten D1 bis Dn erfolgt. Es werden also - beispielsweise - nur die Prozessdaten D1, D7 und D12 übermittelt, nicht aber die Prozessdaten D2 bis D6 und D8 bis D11 sowie - sofern vorhanden - D13, D14 usw..

Die genannten möglichen Vorverarbeitungen sind unabhängig voneinander. Sie können nach Bedarf miteinander kombiniert werden.

Zusammengefasst betrifft die vorliegende Erfindung somit folgenden Sachverhalt:
Ein Rechnerverbund 1 umfasst eine Steuereinrichtung 2 zum Steuern eines industriellen technischen Prozesses 5, eine Logikeinheit 3 und eine Speichereinrichtung 4. Die Steuereinrichtung 2 steuert den industriellen technischen Prozess 5 in einem Arbeitstakt T. Sie hinterlegt Prozessdaten D1 bis Dn, die im Rahmen der Steuerung des industriellen technischen Prozesses 5 innerhalb der Steuereinrichtung 2 mit dem Arbeitstakt T anfallen, zumindest temporär in der Speichereinrichtung 4. Die Logikeinheit 3 nimmt über eine Schnittstelle zu einem Rechnernetz 10 von einem externen Rechner 11 außerhalb des Rechnerverbunds 1 eine Anforderung A für die Prozessdaten D1 bis Dn entgegen. In dem Fall, dass die Anforderung A eine Zugriffsbedingung Z erfüllt, übermittelt die Logikeinheit 3 die in der Speichereinrichtung 4 hinterlegten Prozessdaten D1 bis Dn entsprechend der Anforderung A an den externen Rechner 11. Anderenfalls vorverarbeitet die Logikeinheit 3 die in der Speichereinrichtung 4 hinterlegten Prozessdaten D1 bis Dn, so dass die vorverarbeiteten Prozessdaten D1' bis Dn' im Vergleich zu den hinterlegten Prozessdaten D1 bis Dn einen reduzierten Informationsgehalt aufweisen. Sie übermittelt nur die vorverarbeiteten Prozessdaten D1' bis Dn' entsprechend der Anforderung A an den externen Rechner 11.

Die vorliegende Erfindung weist viele Vorteile auf. Insbesondere kann durch die Logikeinheit 3 und damit auf Seiten des Rechnerverbundes 1 entschieden werden, ob dem externen Rechner 11 die Prozessdaten D1 bis Dn (ergänze: so wie sie sind) oder nur die vorverarbeiteten Prozessdaten D1' bis Dn' zur Verfügung gestellt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für einen Rechnerverbund (1),
- wobei der Rechnerverbund (1) eine Steuereinrichtung (2) zum Steuern eines industriellen technischen Prozesses (5), eine Logikeinheit (3) und eine Speichereinrichtung (4) umfasst,
- wobei die Steuereinrichtung (2) den industriellen technischen Prozess (5) in einem Arbeitstakt (T) steuert,
- wobei die Steuereinrichtung (2) Prozessdaten (D1 bis Dn), die im Rahmen der Steuerung des industriellen technischen Prozesses (5) innerhalb der Steuereinrichtung (2) mit dem Arbeitstakt (T) anfallen, zumindest temporär in der Speichereinrichtung (4) hinterlegt,
- wobei die Logikeinheit (3) über eine Schnittstelle zu einem Rechnernetz (10) von einem externen Rechner (11) außerhalb des Rechnerverbunds (1) eine Anforderung (A) für die Prozessdaten (D1 bis Dn) entgegennimmt,
- wobei die Logikeinheit (3) in dem Fall, dass die Anforderung (A) eine Zugriffsbedingung (Z) erfüllt, die in der Speichereinrichtung (4) hinterlegten Prozessdaten (D1 bis Dn) entsprechend der Anforderung (A) an den externen Rechner (11) übermittelt,
**dadurch gekennzeichnet, dass**
- die Logikeinheit (3) in dem Fall, dass die Anforderung (A) die Zugriffsbedingung (Z) nicht erfüllt, die in der Speichereinrichtung (4) hinterlegten Prozessdaten (D1 bis Dn) vorverarbeitet, so dass die vorverarbeiteten Prozessdaten (D1' bis Dn') im Vergleich zu den hinterlegten Prozessdaten (D1 bis Dn) einen reduzierten Informationsgehalt aufweisen, und nur die vorverarbeiteten Prozessdaten (D1' bis Dn') entsprechend der Anforderung (A) an den externen Rechner (11) übermittelt.

2. Betriebsverfahren nach Anspruch 1,
**dardurch gekennzeichnet,**
dass die Vorverarbeitung ein Ausfiltern von auf bestimmte Arbeitstakte (T) bezogenen, in der Speichereinrichtung (4) hinterlegten Prozessdaten (D1 bis Dn) umfasst.

3. Betriebsverfahren nach Anspruch 1 oder 2,
**dadurch gekennzeichnet, dass** die Vorverarbeitung eine Mittelwertbildung von auf einen Zeitraum von mehreren Arbeitstakten (T) bezogenen, in der Speichereinrichtung (4) hinterlegten Prozessdaten (D1 bis Dn) umfasst.

4. Betriebsverfahren nach Anspruch 1, 2 oder 3,
**dadurch gekennzeichnet, dass** die Vorverarbeitung die Ermittlung eines Wertes D1') anhand von mehreren auf einen jeweiligen Arbeitstakt (T) bezogenen, in der Speichereinrichtung (4) hinterlegten Prozessdaten (D1 bis Dn) umfasst.

5. Betriebsverfahren nach einem der obigen Ansprüche,
**dadurch gekennzeichnet, dass** die Vorverarbeitung eine Rundung von in der Speichereinrichtung (4) hinterlegten Prozessdaten (D1 bis Dn) umfasst.

6. Betriebsverfahren nach einem der obigen Ansprüche,
**dadurch gekennzeichnet, dass** die in der Speichereinrichtung (4) hinterlegten Prozessdaten (D1 bis Dn) zusätzlich zu den erfassten Prozessdaten (D1 bis Dn) jeweils einen zugeordneten Namen (XYZ) umfassen und dass die Vorverarbeitung eine vollständige oder teilweise Entfernung des Namens (XYZ) umfasst.

7. Betriebsverfahren nach Anspruch 6,
**dadurch gekennzeichnet, dass** die Vorverarbeitung eine dynamische Umsortierung der vorverarbeiteten Prozessdaten (D1' bis Dn') gegenüber den in der Speichereinrichtung (4) hinterlegten Prozessdaten (D1 bis Dn) umfasst.

8. Betriebsverfahren nach einem der obigen Ansprüche,
**dadurch gekennzeichnet, dass** die Vorverarbeitung ein teilweises Ausfiltern von auf einen bestimmten Arbeitstakt (T) bezogenen Prozessdaten (D1 bis Dn) umfasst.

9. Betriebsverfahren nach einem der obigen Ansprüche,
**dadurch gekennzeichnet, dass** den in der Speichereinrichtung (4) hinterlegten Prozessdaten (D1 bis Dn) ein Zeitstempel (Ti) zugeordnet ist und dass die Prozessdaten (D1 bis Dn) in der Speichereinrichtung (4) archiviert werden.

10. Betriebsverfahren nach einem der obigen Ansprüche,
**dadurch gekennzeichnet, dass** die Steuereinrichtung (2) als numerische Steuerung, als speicherprogrammierbare Steuerung oder als Industrie-PC ausgebildet ist.

11. Betriebsverfahren nach einem der Ansprüche 1 bis 10,
**dadurch gekennzeichnet, dass** die Logikeinheit (3) und die Steuereinrichtung (2) eine Einheit bilden.

12. Betriebsverfahren nach einem der Ansprüche 1 bis 10,
**dadurch gekennzeichnet, dass** die Logikeinheit (3) eine von der Steuereinrichtung (2) verschiedene Einrichtung ist.

13. Computerprogramm, das Maschinencode (9) umfasst, der von einer Logikeinheit (3) eines Rechnerverbundes (1) abarbeitbar ist, wobei die Abarbeitung des Maschinencodes (9) durch die Logikeinheit (3) bewirkt, dass die Logikeinheit (3) die auf die Logikeinheit (3) bezogenen Schritte eines Betriebsverfahrens nach einem der obigen Ansprüche ausführt.

14. Logikeinheit eines Rechnerverbundes (1), wobei die Logikeinheit mit einem Computerprogramm (8) nach Anspruch 13 programmiert ist, so dass die Logikeinheit die auf die Logikeinheit bezogenen Schritte eines Betriebsverfahrens nach einem der Ansprüche 1 bis 12 ausführt.

15. Rechnerverbund,
- wobei der Rechnerverbund eine Steuereinrichtung (2) zum Steuern eines industriellen technischen Prozesses (5), eine Logikeinheit (3) und eine Speichereinrichtung (4) umfasst,
- wobei die Logikeinheit (3) gemäß Anspruch 14 ausgebildet ist.

## Claims

1. Operating method for a computer network (1),
- wherein the computer network (1) comprises a control device (2) for control of an industrial technical process (5), a logic unit (3) and a memory device (4),
- wherein the control device (2) controls the industrial technical process (5) in an operating cycle (T),
- wherein the control device (2) stores process data (D1 to Dn), which arises within the framework of control of the industrial technical process (5) within the control device (2) with the operating cycle (T), at least temporarily in the memory device (4),
- wherein the logic unit(3), via an interface to a computer network (10), accepts a request (A) for the process data (D1 to Dn) from an external computer (11) outside of the computer network (1),
- wherein the logic unit (3), in the event of the request (A) fulfilling an access condition (Z), transfers the process data (D1 to Dn) stored in the memory device (4) to the external computer (11) in accordance with the request (A)
**characterised in that**
- the logic unit (3), in the event of the request (A) not fulfilling the access condition (Z), preprocesses the process data (D1 to Dn) stored in the memory device (4), so that the preprocessed process data (D1' to Dn'), by comparison with the stored process data (D1 to Dn), has a reduced information content, and only transfers the preprocessed process data (D1' to Dn') to the external computer (11) in accordance with the request (A).

2. Operating method according to claim 1,
**characterised in**
**that** the preprocessing comprises a filtering out of process data (D1 to Dn) stored in the memory device (4) relating to specific operating cycles (T).

3. Operating method according to claim 1 or 2,
**characterized in that** the preprocessing comprises forming an average value of process data (D1 to Dn) stored in the memory device (4) relating to a period of a number of operating cycles (T).

4. Operating method according to claim 1, 2 or 3,
**characterised in that** the preprocessing comprises the establishing of a value (D1') on the basis of a number of process data (D1 to Dn) stored in the memory device (4) relating to a respective operating cycle (T).

5. Operating method according to one of the above claims,
**characterized in that** the preprocessing comprises a rounding of the process data (D1 to Dn) stored in the memory device (4).

6. Operating method according to one of the above claims,
**characterised in that** the process data (D1 to Dn) stored in the memory device (4), in addition to the acquired process data (D1 to Dn), comprises an assigned name (XYZ) in each case and that the preprocessing comprises complete or partial removal of the name (XYZ).

7. Operating method according to claim 6,
**characterised in that** the preprocessing comprises a dynamic re-sorting of the preprocessed process data (D1' to Dn') compared to the process data (D1 to Dn) stored in the memory device (4).

8. Operating method according to one of the above claims,
**characterized in that** the preprocessing comprises a partial filtering out of process data (D1 to Dn) relating to a specific operating cycle (T).

9. Operating method according to one of the above claims,
**characterized in** n that the process data (D1 to Dn) stored in the memory device (4) is assigned a time stamp (Ti) and that the process data (D1 to Dn) will be archived in the memory device (4).

10. Operating method according to one of the above claims,
**characterised in that** the control device (2) is embodied as a numerical control, as a programmable logic control unit or as an industry PC.

11. Operating method according to one of claims 1 to 10,
**characterised in that** the logic unit (3) and the control device (2) form one unit.

12. Operating method according to one of claims 1 to 10,
**characterised in that** the logic unit (3) is a different device from the control device (2).

13. Computer program, comprising machine code (9) that is able to be executed by a logic unit (3) of a computer network (1), wherein the effect of the execution of the machine code (9) by the logic unit (3) is that the logic unit (3) carries out the steps of an operating method relating to the logic unit (3) according to one of the above claims.

14. Logic unit of a computer network (1), wherein the logic unit is programmed with a computer program (8) according to claim 13, so that the logic unit carries out the steps of an operating method relating to the logic unit according to one of claims 1 to 12.

15. Computer network,
- wherein the computer network comprises a control device (2) for control of an industrial technical process (5), a logic unit (3) and a memory device (4),
- wherein the logic unit (3) is embodied according to claim 14.

## Revendications

1. Procédé pour faire fonctionner une interconnexion (1) d'ordinateur,
- dans lequel l'interconnexion (1) d'ordinateur comprend un dispositif (2) de commande pour commander un processus (5) technique industriel, une unité (3) logique et un dispositif (4) de mémoire,
- dans lequel le dispositif (2) de commande commande le processus (5) technique industriel suivant une cadence (T) de travail,
- dans lequel le dispositif (2) de commande mémorise, au moins temporairement, dans le dispositif (4) de mémoire, des données (D1 à Dn) de processus, qui se produisent à la cadence (T) de travail au sein du dispositif (2) de commande dans le cadre de la commande du processus (5) technique industriel,
- dans lequel l'unité (3) logique reçoit une demande (A) de données (D1 à Dn) de processus par l'intermédiaire d'une interface avec un réseau (10) d'ordinateur d'un ordinateur (11) extérieur à l'extérieur de l'interconnexion (1) d'ordinateur,
- dans lequel l'unité (3) logique, si la demande (A) satisfait une condition (Z) d'accès, transmet à l'ordinateur (11) extérieur, conformément à la demande (A), les données (D1 à Dn) de processus mémorisées dans le dispositif (4) de mémoire,
**caractérisé en ce que**
- l'unité (3) logique, si la demande (A) ne satisfait pas la condition (Z) d'accès, traite au préalable les données (D1 à Dn) de processus mémorisées dans le dispositif (4) de mémoire, de manière à ce que les données (D1' à Dn') de processus traitées au préalable aient, par rapport aux données (D1 à Dn) de processus mémorisée, une teneur informative réduite et ne transmet à l'ordinateur (11) extérieur, conformément à la demande (A), que les données (D1' à Dn') de processus traitées au préalable.

2. Procédé suivant la revendication 1,
**caractérisé en ce que**
le traitement préalable comprend un filtrage de données (D1 à Dn) de processus se rapportant à des cadences (T) de travail déterminées et mémorisées dans le dispositif (4) de mémoire.

3. Procédé suivant la revendication 1 ou 2,
**caractérisé en ce que**
le traitement préalable comprend la formation d'une moyenne de données (D1 à Dn) de processus se rapportant à une durée de plusieurs cadences (T) de travail et mémorisée dans le dispositif (4) de mémoire.

4. Procédé suivant la revendication 1, 2 ou 3,
**caractérisé en ce que**
le traitement préalable comprend la détermination d'une valeur (D1') à l'aide de plusieurs données (D1 à Dn) de processus se rapportant à une cadence (T) de travail respective et mémorisées dans le dispositif (4) de mémoire.

5. Procédé suivant l'une des revendications précédentes,
**caractérisé en ce que**
le traitement préalable comprend le fait d'arrondir des données (D1 à Dn) de processus mémorisées dans le dispositif (4) de mémoire.

6. Procédé suivant l'une des revendications précédentes,
**caractérisé en ce que**
les données (D1 à Dn) de processus mémorisées dans le dispositif (4) de mémoire comprennent, en plus des données (D1 à Dn) de processus détectées, respectivement une dénomination (XYZ) affectée et **en ce que** le traitement préalable comprend un retrait complet ou partiel de la dénomination (XYZ).

7. Procédé suivant la revendication 6,
**caractérisé en ce que**
le traitement préalable comprend un tri dynamique des données (D1' à Dn' ) de processus traitées au préalable par rapport aux données (D1 à Dn) de processus mémorisées dans le dispositif (4) de mémoire.

8. Procédé suivant l'une des revendications précédentes,
**caractérisé en ce que**
le traitement préalable comprend un filtrage partiel de données (D1 à Dn ) de processus se rapportant à une cadence (T) de travail déterminée.

9. Procédé suivant l'une des revendications précédentes,
**caractérisé en ce qu'**
aux données (D1 à Dn) de processus mémorisées dans le dispositif (4) de mémoire est affecté un horodatage (Ti) et **en ce que** l'on archive les données (D1 à Dn) de processus dans le dispositif (4) de mémoire.

10. Procédé suivant l'une des revendications précédentes,
**caractérisé en ce que**
le dispositif (2) de commande est constitué sous la forme d'une commande numérique, d'une commande à mémoire enregistrée ou d'un PC d'industrie.

11. Procédé suivant l'une des revendications 1 à 10,
**caractérisé en ce que**
l'unité (3) logique et le dispositif (2) de commande forment une unité.

12. Procédé suivant l'une des revendications 1 à 10,
**caractérisé en ce que**
l'unité (3) logique est un dispositif différent du dispositif (2) de commande.

13. Programme d'ordinateur, qui comprend un code (9) machine pouvant être traité par une unité (3) logique d'une interconnexion (1) d'ordinateur, le traitement du code (9) machine par l'unité (3) logique faisant que l'unité (3) logique exécute les stades, se rapportant à l'unité (3) logique, d'un procédé de fonctionnement suivant l'une des revendications précédentes.

14. Unité logique d'une interconnexion (1) d'ordinateur, l'unité logique étant programmée par un programme (8) d'ordinateur suivant la revendication 13, de manière à ce que l'unité logique exécute les stades se rapportant à l'unité logique d'un procédé de fonctionnement suivant l'une des revendications 1 à 12.

15. Interconnexion d'ordinateur,
- dans laquelle l'interconnexion d'ordinateur comprend un dispositif (2) de commande pour commander un processus (5) technique industriel, une unité (3) logique et un dispositif (4) de mémoire,
- dans laquelle l'unité (3) logique est constituée suivant la revendication 14.
